# EUROPÄISCHE PATENTANMELDUNG

(11) **EP 4 174 032 A1**
(43) Veröffentlichungstag der Anmeldung: **03.05.2023**
(21) Anmeldenummer: 21205888.7
(22) Anmeldetag: 02.11.2021
(51) Int. Cl.: C02F 1/00, C02F 1/50, B01D 24/00, B01D 35/02, B01D 35/04, B01D 39/06, B01D 39/20, B01D 37/02, B01J 20/04, B01J 20/10, B01J 20/20, B01J 20/28, B01J 39/05, B01J 39/07, B01J 47/016, B01J 47/024, C02F 1/28, C02F 1/42

(54) **KARTUSCHE UND VERFAHREN ZUR TRINKWASSERAUFBEREITUNG**

(71) Anmelder: BWT Holding GmbH, 5310 Mondsee (AT)
(72) Erfinder: Johann, Jürgen, 69226 Nußloch (DE); Schmidt, Thomas, 68519 Viernheim (DE); Pixner, Katharina, 5222 Munderfing (AT)
(74) Vertreter: Friderichs, Gunther

(57) **Zusammenfassung**

Die Offenbarung betrifft eine Kartusche (20) zur Trinkwasseraufbereitung, insbesondere ausgebildet für einen Tischwasserfilter oder eine Untertisch-Wasseraufbereitungsanlage. Die Kartusche (20) umfasst zumindest eine durchströmbare Kammer mit einem Filterbett (1), welches ein Filtermaterial mit einem Ionenaustauscher und/oder Aktivkohle umfasst. Die durchströmbare Kammer ist dadurch gekennzeichnet, dass das Filterbett als Keimschutz Magnesium- und/oder Calciumsulfit enthält.

## Beschreibung

### Gebiet der Erfindung

Die Erfindung betrifft eine Kartusche sowie ein Verfahren zur Trinkwasseraufbereitung. Insbesondere betrifft die Erfindung eine Kartusche für einen Tischwasserfilter sowie eine Kartusche für einen Untertischfilter.

### Hintergrund der Erfindung

Zur Trinkwasseraufbereitung sind zum einen schwerkraftbetriebene Tischwasserfilter bekannt. Diese umfassen eine Filterkartusche, welche in einen Trichter eingesetzt ist. Das aufzubereitende Wasser durchläuft schwerkraftbetrieben die Filterkartusche und sammelt sich in einem Wassersammelraum.

Eine derartige Kartusche dient in der Regel nicht lediglich als Filter, also zur Entfernung von Schwebstoffen, sondern umfasst ein Filterbett zur Aufbereitung des Trinkwassers. Das Filterbett kann beispielsweise ein Ionenaustauschermaterial zur Enthärtung des Wassers sowie zur Entfernung von Schwermetallen umfassen. Weiter kann das Filterbett Aktivkohle zur Entfernung von Chlor, Geschmacks- und Geruchsstoffen im aufzubereitenden Wasser enthalten oder andere aktive Filtermaterialien.

Gleichfalls bekannt sind Kartuschen für Untertischfilter. Diese sind als sogenannte Filterkerzen ausgebildet und werden in einen Filterkerzenkopf eingesetzt, insbesondere eingeschraubt. Die Kartusche ist so inline an das bauseitig vorhandene Wassernetz angebunden und wird insbesondere in Haushalt und Gastronomie zur Zubereitung von Kalt- und Heißgetränken verwendet.

Die Kartuschen sind regelmäßig nach Erschöpfung auszutauschen und werden sodann recycelt oder regeneriert.

Insbesondere bei Tischwasserfiltern, aber auch bei Untertischfiltern, kann es unter Umständen zu einem Keimwachstum im Filterbett kommen. Um das diesbezügliche Risiko zu minimieren, ist es bekannt, das Filterbett mit Silber zu versetzen.

Silber hat eine biozide (bakteriostatische) Wirkung und kann recht zuverlässig das Wachsen von Keimen stark reduzieren oder sogar verhindern.

Auf der anderen Seite steht Silber zumindest in höheren Konzentrationen in dem Verdacht, gesundheitsschädlich zu sein. Silber im Ausgangswasser ist daher unerwünscht, zumindest sollte die Silberkonzentration im Ausgangswasser möglichst gering sein.

Die Offenlegungsschrift WO 2014/001529 A1 (BWT AG) beschreibt vor diesem Hintergrund eine Kartusche, in die ausgangsseitig ein Vlies eingelegt ist, welches Silber sowohl in elementarer als auch in Ionenform bindet. Die Konzentration von Silber im Ausgangswasser kann hierdurch zumindest deutlich reduziert werden.

Die Bereitstellung eines derartigen Materials ist allerdings aufwendig. Weiter kann die Abgabe von Silber an das Trinkwasser nicht immer vollständig verhindert werden.

Weiter ist die Aufbereitung und/oder Entsorgung des gesilberten Ionenaustauschermaterials sowie des mit Silber beladenen Vlies aufwendig.

### Aufgabe der Erfindung

Der Erfindung liegt demgegenüber die Aufgabe zugrunde, einen Keimschutz für eine Kartusche zur Wasseraufbereitung bereitzustellen, bei welchem auf die Verwendung von Silber verzichtet werden kann und welcher dennoch wirksam und einfach bereitstellbar ist.

### Zusammenfassung der Erfindung

Die Aufgabe der Erfindung wird bereits durch eine Kartusche zur Trinkwasseraufbereitung, durch ein Verfahren zur Trinkwasseraufbereitung sowie durch die Verwendung von Magnesium- und/oder Calciumsulfit als Verkeimungsschutz gelöst.

Bevorzugte Ausführungsformen und Weiterbildungen der Erfindung sind dem Gegenstand der abhängigen Ansprüche, der Beschreibung sowie den Zeichnungen zu entnehmen.

### Die Erfindung betrifft eine Kartusche zur Trinkwasseraufbereitung.

Gemäß einer Ausführungsform ist die Kartusche für einen Tischwasserfilter ausgebildet. Eine derartige Kartusche hat ein Gehäuse mit einem Rand, welcher dichtend in einen Trichter eingesetzt werden kann. Oberhalb des Randes befindet sich ein Eingang für das aufzubereitende Wasser und unter dem dichtenden Rand ein Ausgang, über den das aufbereitete Wasser in den Wassersammelraum fließt. Das Wasser fließt bei einem derartigen Tischwasserfilter schwerkraftbetrieben durch die Kartusche.

Gemäß einer anderen Ausführungsform ist die Kartusche für eine Untertisch-Wasseraufbereitungsanlage ausgebildet.

Eine derartige Kartusche kann insbesondere als Filterkerze ausgebildet sein und einen Anschlusskopf mit einem Eingang und einem Ausgang aufweisen. Die Kartusche wird über einen Filterkerzenkopf inline in die bauseitig vorhandene Wasserleitung eingesetzt.

Bei dieser Art von Kartusche durchströmt also das aufzubereitende Wasser aufgrund des anliegenden Wasserdrucks die Kartusche und wird sodann zu einer Zapfstelle, insbesondere zu einer Maschine zur Zubereitung von Heißgetränken, weitergeleitet.

Die Kartusche umfasst zumindest eine durchströmbare Kammer mit einem Filterbett. Das Filterbett kann insbesondere als Granulat ausgebildet sein.

Das Filterbett umfasst ein Filtermaterial, insbesondere mit einem Ionenaustauscher und/oder Aktivkohle oder andere aktive Filtermaterialien. Das Filtermaterial dient der Aufbereitung des Wassers.

Gemäß der Erfindung enthält das Filterbett als Keimschutz bzw. zur Konservierung Magnesium- und/oder Calciumsulfit.

Der Erfindung liegt die Erkenntnis zugrunde, Magnesium- und/oder Calciumsulfit derart bereitzustellen, dass sich dieses in Stagnationsphasen derart löst, dass im Filterbett eine derart hohe Sulfitkonzentration erreicht wird, dass eine biozide (bakteriostatische) Wirkung erzielt wird.

Auf die Verwendung von Silber kann, wie es gemäß einer bevorzugten Ausführungsform vorgesehen ist, so vollständig verzichtet werden.

Gleichzeitig liegt der Erfindung die Erkenntnis zugrunde, dass es möglich ist, das Magnesium- und/oder Calciumsulfit derart einzubringen, dass im Betrieb, also während die Kartusche laufend von Wasser durchströmt wird, es nicht zu einer unerwünscht hohen Sulfitkonzentration im Ausgangswasser kommt.

Das Filterbett kann insbesondere mehr als 2 Vol-% und/oder weniger als 50 Vol-%, insbesondere 5 bis 20 Vol-%, Magnesium- und/oder Calciumsulfit umfassen. Das Volumenverhältnis wird anhand der Schüttdichte bestimmt.

Gemäß einer weiteren Ausführungsform der Erfindung umfasst das Filterbett 5 bis 20 Gewichts% Magnesium- und/oder Calciumsulfit.

Das Filterbett kann so, wie es gemäß einer Ausführungsform vorgesehen ist, nur aus Ionenaustauscher, Aktivkohle und Magnesium- und/oder Calciumsulfit bestehen.

Bei dem Ionenaustauscher kann es sich insbesondere um ein Granulat handeln. Bei dem Ionenaustauscher kann es sich sowohl um einen schwach sauren, als auch um einen stark sauren Ionenaustauscher handeln.

Der Ionenaustauscher kann insbesondere in einer Menge von über 10 und/oder weniger als 90 Vol- und/oder Gewichts%, insbesondere 20 bis 80 Vol- und/oder Gewichts% des Filterbetts ausmachen.

Sofern der Anteil in Vol-% bestimmt wird, kann zunächst die Schüttdichte der Bestandteile des Filterbetts einzeln gemessen werden und diese jeweils in das Verhältnis der Gesamtsumme der jeweils einzeln gemessenen Bestandteile gesetzt werden. So wird eine mögliche Verfälschung des Ergebnisses aufgrund einer Änderung des Schüttverhaltens einer Mischung der Bestandteile verhindert.

Der Ionenaustauscher kann mit Wasserstoff, Magnesium, Lithium, Kalium und/oder Zink beladen sein.

Es ist insbesondere vorgesehen, ein Ionenaustauscher bereitzustellen, welcher zumindest teilweise mit Wasserstoff und teilweise mit einer anderen Ionenart, insbesondere Magnesium, Lithium, Kalium oder Zink, insbesondere zu 5 bis 60 % seine totalen Kapazität (bestimmbar immer nach DIN 54403:2009-04) beladen ist.

Über eine Beladung mit Wasserstoffionen, insbesondere in einem Verhältnis von 10 bis 90% der totalen Kapazität des Ionenaustauschers, wird eine hohe Kapazität zur Enthärtung des aufzubereitenden Wassers bereitgestellt.

Eine Beladung mit Magnesium, Lithium, Kalium oder Zink insbesondere von 5 bis 60% der totalen Kapazität des Ionenaustauschers des Filterbetts gibt dagegen Spurenelemente an das aufzubereitende Wasser im Austausch, insbesondere gegen Calcium, ab.

Das Magnesium- und/oder Calciumsulfit liegt vorzugsweise als Granulat vor, insbesondere mit einer mittleren Partikelgröße von 0,5 bis 10, insbesondere von 1 bis 10 mm.

Das Granulat kann insbesondere sphärisch, also als Kugeln, geformt sein.

Vorzugsweise ist das Magnesium- und/oder Calciumsulfit Teil eines Keramikpartikels. Die Keramikpartikel können insbesondere gesinterte Partikel mit einem vorzugsweise anorganischen Bindemittel sein.

Das Magnesium- und/oder Calciumsulfit kann insbesondere in Partikeln vorhanden sein, die zusätzlich ein Oxid, insbesondere ein Metall- oder Halbmetalloxid und/oder ein Carbonat umfassen.

Oxid und/oder Carbonat können insbesondere in einer Konzentration von 1 bis 20 Gewichts%, vorzugsweise von 2 bis 15 Gewichts%, in dem Partikel vorliegen.

Es kann sich insbesondere um Silicium-, Magnesium- und/oder Calcium-oxid und/oder -Carbonat handeln.

Es hat sich herausgestellt, dass sich dieses Material, im Gegensatz beispielsweise zu einem Pulver, langsam löst und so einen hinreichenden Keimschutz über die gesamte Lebensdauer der Kartusche sicherstellt.

Gleichzeitig wird nicht unerwünscht viel Sulfit an das Ausgangswasser abgegeben.

Bei einer Weiterbildung der Erfindung kann das Filterbett vernetzte Kieselsäure enthalten. Diese kann insbesondere in einer Menge von über 5 Vol-% und/oder unter 90 Vol-%, insbesondere in einer Menge von 5 bis 70 Vol-%, vorliegen.

Die vernetzte Kieselsäure kann einen Glühverlust bei 1000°C von 3 % bis 30 %, bevorzugt von 5 % bis 25 %, besonders bevorzugt von über 6 % bis 15 %, vorzugsweise über 7 % bis 10 %, insbesondere zwischen 7 % und 9 % aufweisen (analog FGK-AV "Glühverlust" (2012-12)).

Weiter kann die vernetzte Kieselsäure einen Trocknungsverlust (bei 145 °C) von über 30 %, vorzugsweise über 40 %, vorzugsweise von über 50 %, insbesondere einen Trocknungsverlust von 55 bis 65 % haben.

Alternativ kann auch eine trockene Kieselsäure mit einem niedrigen Trocknungsverlust, insbesondere von unter 10 %, oder von unter 5 % verwendet werden.

Die vernetzte Kieselsäure kann eine spezifische Oberfläche von über 300 m²/g, vorzugsweise über 700 m²/g, besonders bevorzugt über 800 m²/g, insbesondere zwischen 820 und 1000 m²/g (BET-Verfahren nach DIN ISO 9277-2017-07) haben.

Weiter kann die vernetzte Kieselsäure eine Löslichkeit bei 25 °C von über 80 mg/l, vorzugsweise über 100 mg/l und besonders bevorzugt über 150 mg/l haben.

Über die vernetzte Kieselsäure kann Silicium an das aufzubereitende Wasser abgegeben werden.

Weiter kann gemäß einer Weiterbildung der Erfindung die Kartusche ein alkalisierendes Filtermaterial enthalten, welches insbesondere zumindest eines oder eine Mischung aus zumindest zwei der Materialien umfasst.

Diese können aus der Gruppe ausgewählt sein, welche Dolomite, halbgebrannte Dolomite, Carbonate, insbesondere Calciumcarbonat und/oder Magnesiumcarbonat, Oxide, insbesondere Metall- und/oder Halbmetalloxide, insbesondere Calciumoxid und/oder Magnesiumoxid und/oder Magnesiumhydroxid und/oder Alkalihydroxide und/oder Erdalkalihydroxide, umfasst.

Das alkalisierendes Filtermaterial kann insbesondere in einer Menge von 10 bis 60 Vol-% des Filterbetts vorhanden sein.

Über ein alkalisierendes Material kann des Weiteren ein guter Keimschutz erzielt werden.

Die Erfindung betrifft des Weiteren ein Verfahren zur Trinkwasseraufbereitung, insbesondere unter Verwendung vorstehend beschriebener Kartusche.

Das aufzubereitende Wasser, also das Eingangswasser, wird über ein Filterbett geleitet, welches zumindest einen Ionenaustauscher und/oder Aktivkohle umfasst.

Das aufzubereitende Wasser wird dabei nur temporär über das Filterbett geleitet, so dass Stagnationsphasen entstehen.

Im Falle eines Tischwasserfilters beginnt die jeweilige Stagnationsphase, sobald das Wasser aus dem Trichter vollständig in den Wassersammelraum geflossen ist. Im Falle einer Kartusche für eine Untertisch-Wasseraufbereitungsanlage beginnt die Stagnationsphase jeweils dadurch, dass die Wasserentnahme an der Zapfstelle unterbrochen wird.

Das Filterbett enthält Magnesium- und/oder Calciumsulfit, wobei das Magnesium- und/oder Calciumsulfit in den Stagnationsphasen Sulfit abgibt und so das Filterbett desinfiziert.

Die Konzentration von Sulfit im Ausgangswasser liegt dagegen vorzugsweise lediglich zwischen 0,5 und 5 mg/l, insbesondere zwischen 1 und 2 mg/l.

Die Erfindung betrifft des Weiteren die Verwendung von Magnesium- und/oder Calciumsulfit als Verkeimungsschutz in einem Filterbett, insbesondere bei der vorstehend beschriebenen Kartusche sowie bei dem vorstehend beschriebenen Verfahren.

### Kurzbeschreibung der Zeichnungen

Die Erfindung soll im Folgenden anhand der Zeichnungen Fig. 1 bis Fig. 5 näher erläutert werden.
Fig. 1 ist eine perspektivische Ansicht eines Ausführungsbeispiels eines Tischwasserfilters.
Fig. 2 ist eine aufgeschnittene Ansicht einer für den Tischwasserfilter verwendeten Kartusche.
Fig. 3 ist ein Längsschnitt einer Kartusche, welche als Filterkerze ausgebildet ist.
Fig. 4 zeigt die Konzentrationsveränderung verschiedener Bestandteile bei Verwendung einer erfindungsgemäßen Kartusche.
Fig. 5 zeigt die Konzentration von Sulfit über die Lebensdauer einer Kartusche.

### Detaillierte Beschreibung der Zeichnungen

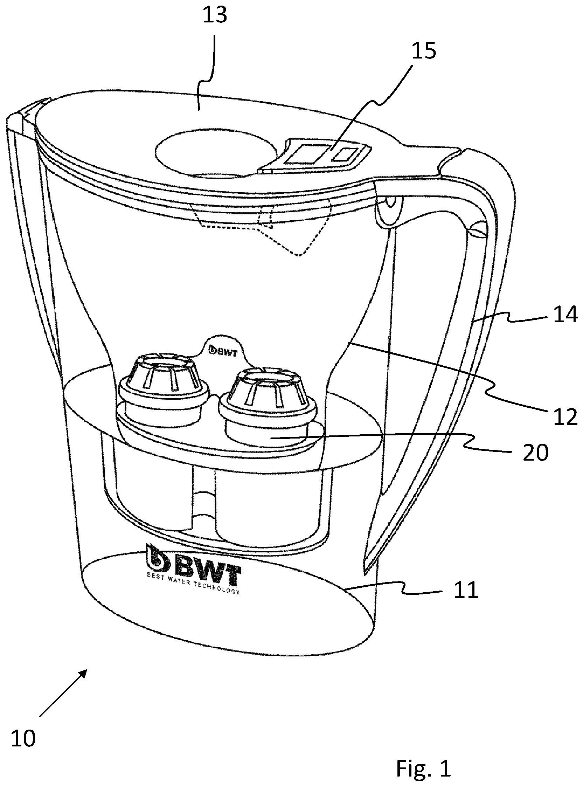

Fig. 1 zeigt in einer perspektivischen Ansicht ein Ausführungsbeispiel eines Tischwasserfilters 10.

Der Tischwasserfilter 10 umfasst eine Kanne 11, welche als Wassersammelbehälter dient.

In die Kanne 11 eingesetzt ist ein Trichter 12, in welchen seinerseits die Kartusche 20 zum Filtern des Wassers eingesetzt ist.

Das aufzubereitende Wasser fließt so aus dem Trichter 12 in die Kanne 11.

Die Kanne kann einen Griff 14 und einen Deckel 13 umfassen.

Weiter kann die Kanne eine Wechselanzeige 15 umfassen, die signalisiert, dass die Kartusche 20 auszutauschen ist. Die Lebensdauer der Kartusche 20 kann beispielsweise zeitbasiert bestimmt werden. Weitere Möglichkeiten sind beispielsweise die Anzahl der Benutzungen des Tischwasserfilters 10 und/oder die Messung des aufbereiteten Wasservolumens.

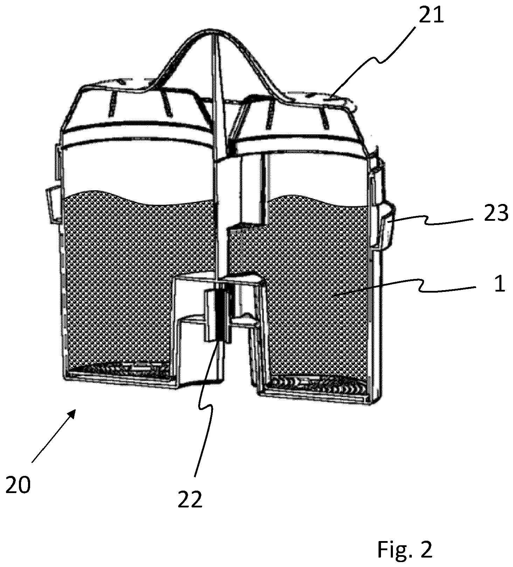

Fig. 2 zeigt die Kartusche 20 in einer aufgeschnittenen Ansicht.

Die Kartusche 20 umfasst einen Eingang 21, einen Ausgang 22 sowie einen Rand 23, welcher dichtend in dem in Fig. 1 dargestellten Trichter sitzen kann.

Das Wasser fließt über den Eingang 21 schwerkraftbetrieben in die Kartusche 20, durchströmt das Filterbett 1 und tritt am Ausgang 22 aus, von wo aus es in den Wassersammelbehälter läuft.

Das Filterbett 1 umfasst eine Mischung aus einem Ionenaustauschermaterial sowie Aktivkohle.

Erfindungsgemäß umfasst das Filterbett 1 des Weiteren Calciumsulfitpartikel als Keimschutz.

Die Calciumsulfitpartikel sind vorzugsweise als sphärische Partikel aus einem keramischen Material ausgebildet.

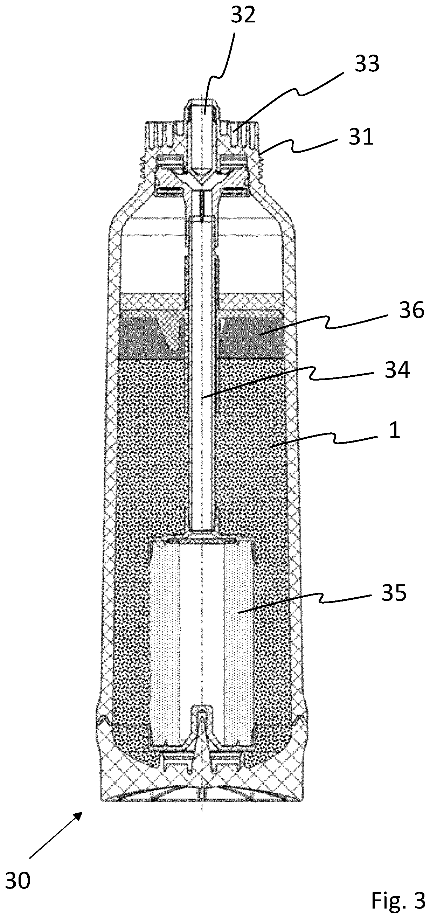

Fig. 3 zeit in einem Längsschnitt eine Kartusche 30, welche als Filterkerze für einen Untertischfilter ausgebildet ist.

Die Kartusche 30 umfasst einen Kerzenkopf mit einem mittigen Eingang 32 sowie einem Ausgang 33, welcher als Ringkanal ausgebildet ist. Es versteht sich, dass Eingang 32 und Ausgang 33 auch umgekehrt angeordnet sein können.

In diesem Ausführungsbeispiel strömt das aufzubereitende Wasser über den Eingang 32 durch ein Fallrohr 34 in die Kartusche 30.

Das aufzubereitende Wasser tritt über einen Filter 35 aus dem Fallrohr 34 aus und durchströmt sodann das Filterbett 1 in Richtung Anschlusskopf 31.

Das Filterbett 1 wird über einen weiteren Filter 36 zurückgehalten. Über den Filter 36 strömt das aufbereitete Wasser zum Ausgang 33.

Das Filterbett 1 ist bei dieser Kartusche 30 ebenfalls wie vorstehend beschrieben ausgebildet.

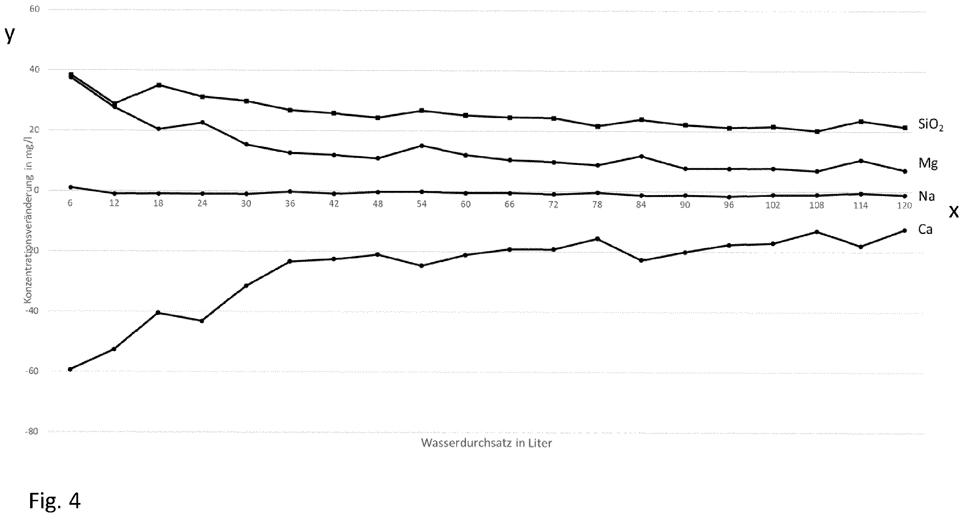

Fig. 4 zeigt in einem Graph die Konzentrationsveränderung der Ionen Calcium, Natrium und Magnesium sowie von Silicumoxid gemäß einem Ausführungsbeispiel der Erfindung.

Auf der x-Achse ist die gefilterte Wassermenge in Litern und auf der y-Achse die Konzentrationsveränderung in Milligramm/Liter aufgetragen.

In diesem Ausführungsbeispiel ist die Filterkartusche mit einem Ionenaustauschermaterial befüllt, welches mit Magnesium beladen ist.

Weiter enthält die Filterkartusche mit Wasserstoff beladenes Ionenaustauschermaterial.

Schließlich enthält die Filterkartusche zur Abgabe von Silicium an das aufzubereitende Wasser amorphe Kieselsäure.

Als Keimschutz enthält die Kartusche Calciumsulfit.

Zu erkennen ist, dass, sobald sich die Austauschreaktionen nach einigen Litern eingestellt haben, über die gesamte Lebensdauer eine stabile Abgabe von Magnesium in einer Konzentrationserhöhung von 5 bis 20 mg/l erreicht werden kann.

Die Abgabe von Siliciumoxid beträgt über die gesamte Lebensdauer zwischen 20 und 40 mg/l.

Die Entfernung von Calcium lässt über die Lebensdauer der Kartusche nach, so dass diese bei einer Konzentrationsveränderung von weniger als 10 mg/l Calcium auszutauschen ist.

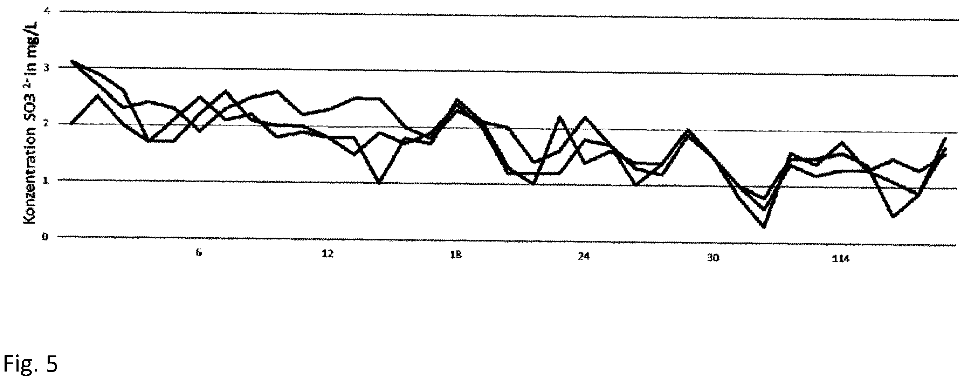

Fig. 5 zeigt Graphen verschiedener Testmuster der Kartusche, wobei hier die Konzentration an Sulfit in Milligramm/Litern gegenüber der gefilterten Wassermenge aufgetragen in Litern dargestellt ist.

Zu erkennen ist, dass sich die Konzentration an Sulfit im Ausgangswasser während der Lebensdauer um 2 mg/l herum einpendelt. Der Grenzwert von 5 mg/l Sulfit wird nie erreicht. Magnesium- und/oder Calciumsulfit ist ein auch bei Lebensmitteln unbedenkliches Material, mit welchem gemäß der Erfindung in überraschend guter Weise ein Keimschutz erzielt werden kann.

### Bezugszeichenliste

- 1: Filterbett
- 10: Tischwasserfilter
- 11: Kanne
- 12: Trichter
- 13: Deckel
- 14: Griff
- 15: Wechselanzeige
- 20: Kartusche
- 21: Eingang
- 22: Ausgang
- 23: Rand
- 30: Kartusche
- 31: Anschlusskopf
- 32: Eingang
- 33: Ausgang
- 34: Fallrohr
- 35: Filter
- 36: Filter

## Patentansprüche

1. Kartusche zur Trinkwasseraufbereitung, insbesondere ausgebildet für einen Tischwasserfilter oder eine Untertisch-Wasseraufbereitungsanlage,
wobei die Kartusche zumindest eine durchströmbare Kammer mit einem Filterbett umfasst, welches ein Filtermaterial, insbesondere mit einem Ionenaustauscher und/oder Aktivkohle, umfasst, **dadurch gekennzeichnet, dass** das Filterbett als Keimschutz , insbesondere zur Konservierung des Filtermaterials, Magnesium- und/oder Calciumsulfit enthält.

2. Kartusche nach dem vorstehenden Anspruch, **dadurch gekennzeichnet, dass** das Filterbett mehr als 2 Vol-% und/oder weniger als 50 Vol-%, insbesondere 5 bis 20 Vol- % Magnesium- und/oder Calciumsulfit umfasst.

3. Kartusche nach einem der vorstehenden Ansprüche, **dadurch gekennzeichnet, dass** das Filterbett silberfrei ist, insbesondere nur aus Ionenaustauscher, Aktivkohle und Magnesium- und/oder Calciumsulfit besteht.

4. Kartusche nach einem der vorstehenden Ansprüche, **dadurch gekennzeichnet, dass** das Magnesium- und/oder Calciumsulfit als Granulat, insbesondere sphärisch geformtes Granulat, insbesondere mit einer mittleren Partikelgröße von 1 bis 10 mm vorliegt.

5. Kartusche nach einem der vorstehenden Ansprüche, **dadurch gekennzeichnet, dass** das Magnesium- und/oder Calciumsulfit Teil eines Keramikpartikels ist,
und/oder dass das Magnesium- und/oder Calciumsulfit in Partikeln vorhanden ist, die ein Oxid, insbesondere Metall- oder Halbmetalloxid und/oder ein Carbonat umfassen, insbesondere in einer Konzentration von 1 bis 20 Gewichts%, vorzugsweise von 2 bis 15 Gewichts%, insbesondere Silicium-, Magnesium- und/oder Calcium-Oxid und/oder Carbonat.

6. Kartusche nach einem der vorstehenden Ansprüche, **dadurch gekennzeichnet, dass** die Kartusche einen Ionenaustauscher in einer Menge von über 10 % und/oder weniger als 90 Vol- %, insbesondere von 20 bis 80 Vol-% umfasst, insbesondere einen mit Wasserstoff, Magnesium, Lithium, Kalium und/oder Zink beladenen Ionenaustauscher.

7. Kartusche nach einem der vorstehenden Ansprüche, **dadurch gekennzeichnet, dass** das Filterbett vernetzte Kieselsäure enthält, insbesondere in einer Menge von über 5 Vol-% und/oder unter 90 Vol-%, insbesondere von 15 bis 70 Vol- %.

8. Kartusche nach dem vorstehenden Anspruch, **dadurch gekennzeichnet, dass** die vernetzte Kieselsäure einen Glühverlust bei 1000°C von 3 % bis 30 %, bevorzugt von 5 % bis 25 %, besonders bevorzugt von über 6 % bis 15 %, vorzugsweise über 7 % bis 10 %, insbesondere zwischen 7 % und 9 % aufweist (analog FGK-AV "Glühverlust" (2012-12)), und/oder einen Trocknungsverlust von über 30 %, vorzugsweise über 40 %, vorzugsweise von über 50 %, insbesondere einen Trocknungsverlust von 55 bis 65 % hat, und/oder dass die vernetzte Kieselsäure eine spezifische Oberfläche von über 300 m²/g, vorzugsweise über 700 m²/g, besonders bevorzugt über 800 m²/g, insbesondere zwischen 820 und 1000 m²/g hat (BET-Verfahren nach DIN ISO 9277-2017-07) und/oder mit eine Löslichkeit bei 25 °C von über 80 mg/l, vorzugsweise über 100 mg/l und besonders bevorzugt über 150 mg/l, hat.

9. Kartusche nach einem der vorstehenden Ansprüche, **dadurch gekennzeichnet, dass** die Kartusche ein alkalisierendes Filtermaterial enthält, welches insbesondere zumindest eines oder eine Mischung aus zumindest zwei der Materialien umfasst, die aus der Gruppe ausgewählt sind, welche Dolomite, halbgebrannte Dolomite, Carbonate, insbesondere Calciumcarbonat und/oder Magnesiumcarbonat, Oxide, insbesondere Metall- und/oder Halbmetalloxide, insbesondere Calciumoxid und/oder Magnesiumoxid und/oder Magnesiumhydroxid und/oder Alkalihydroxide und/oder Erdalkalihydroxide, umfasst,
insbesondere in einer Menge von 10 bis 60 Vol-% des Filterbetts.

10. Verfahren zur Trinkwasseraufbereitung, insbesondere unter Verwendung einer Kartusche nach einem der vorstehenden Ansprüche, umfassend die Schritte:
Leiten des aufzubereitenden Wassers über ein Filterbett,
wobei das Filterbett zumindest einen Ionenaustauscher und/oder Aktivkohle umfasst,
wobei das aufzubereitende Wasser temporär über das Filterbett geleitet wird, so dass Stagnationsphasen entstehen, in welchen Wasser in dem Filterbett steht,
wobei das Filterbett durch Magnesium- und/oder Calciumsulfit desinfiziert bzw. konserviert wird.

11. Verfahren nach dem vorstehenden Anspruch, **dadurch gekennzeichnet, dass** dem Filterbett eine derart hohe Menge Magnesium- und/oder Calciumsulfit beigemischt wird, dass die Konzentration von Sulfit im aufbereiteten Wasser zwischen 0,5 und 5 mg/l, insbesondere zwischen 1 und 2 mg/l liegt.

12. Verwendung von Magnesium- und/oder Calciumsulfit als Verkeimungsschutz in einem Filterbett, insbesondere bei einer Kartusche nach einem der vorstehenden Ansprüche und/oder bei einem Verfahren nach einem der vorstehenden Ansprüche.
